# EUROPÄISCHE PATENTSCHRIFT

(11) **EP 0 724 943 B1**
(45) Veröffentlichungstag und Bekanntmachung des Hinweises auf die Patenterteilung: **01.03.2000**
(21) Anmeldenummer: 95120177.1
(22) Anmeldetag: 20.12.1995
(51) Int. Cl.: B29C 45/27

(54) **Heisskanaldüse**
Hot runner nozzle
Buse à canal chaud

(30) Priorität: 31.01.1995 DE 29501450 U
(43) Veröffentlichungstag der Anmeldung: 07.08.1996
(73) Patentinhaber: Günther Heisskanaltechnik GmbH, 35066 Frankenberg/Eder (DE)
(72) Erfinder: Günther, Herbert, Dipl.-Ing., D-35108 Allendorf/Eder (DE)
(74) Vertreter: Olbricht, Karl Heinrich, Dipl.-Phys.

(56) Entgegenhaltungen:
- EP-A- 0 225 514
- EP-A- 0 444 748
- DE-U- 8 620 956
- US-A- 4 268 241

## Beschreibung

Die vorliegende Erfindung betrifft eine Heißkanaldüse gemäß dem Oberbegriff von Anspruch 1.

Es gibt seit längerem eine Reihe von Konstruktionen außenbeheizter Heißkanaldüsen, beispielsweise nach US-A-3 091 812 oder in DE-A-2 716 950. Verhältnismäßig früh wurden auch Vorschläge für den Einbau von Thermofühlern gemacht, wie das z.B. aus NL-A-7 900 927 oder aus der EP-A-225 514 hervorgeht. Zum Teil wurden dabei aufwendige Heizwicklungen vorgesehen, deren Anschlüsse und Isolierung problematisch sein konnten. Auch konzentrierte sich die Wärmeentwicklung meist im Inneren, wogegen an der Düsenspitze schon durch das kühlere Formnest eine Wärmeabfuhr stattfand, welche die Anguß-Qualität des erzeugten Artikels beeinträchtigte. Des Oberbegriff des Anspruchs 1 basiert auf der DE-U-86 20 956.

Aufgabe der Erfindung ist die Schaffung einer verbesserten Heißkanaldüse, die nicht nur eine günstige Beheizung bis in den Bereich der Düsenspitze vorsieht, sondern auch die zuverlässige, geschützte Anbringung eines Thermofühlers auf einfache Weise gestattet. Die Heißkanaldüse soll kostengünstig zu fertigen und leicht montierbar sein.

Hauptmerkmale der Erfindung sind im kennzeichnenden Teil von Anspruch 1 angegeben. Ausgestaltungen sind Gegenstand der Ansprüche 2 bis 7.

Bei einer Heißkanaldüse mit einem in ein Gehäuse einsetzbaren, außenbeheizten Materialrohr, das am unteren Ende eine Düsenspitze und einen an diesen Bereich herangeführten Thermofühler aufweist, wobei dieser und die Heizung seitlich mit elektrischen Anschlüssen versehen sind und wobei die Heizung als vormontierte Heizeinheit mit einem Vergußkörper ausgebildet ist, der ein den Thermofühler aufnehmendes Fühlerrohr haltert, sieht die Erfindung gemäß Anspruch 1 vor, daß das Fühlerrohr zwischen Umfangs-Enden eines Lochblechs sitzt, das Bestandteil eines Rohrkörpers ist, dessen Innenwandung eine Stützwand für eine dadurch mechanisch geschützte Heizwicklung bildet, und daß die Anschlüsse von Heizeinheit und Thermofühler übereinander so angeordnet sind, daß deren Steckmontage in dem mit einer zugeordneten seitlichen Aussparung versehenen Gehäuse ausführbar ist.

Man erreicht hierdurch auf einfache Weise, daß die Heizwicklung außerhalb des seitlichen Zugangs für die Anschlüsse und außerhalb des Fühlerrohrs liegt, das seinerseits in dem Rohrkörper geschützt angeordnet ist. Die Heizwicklung wird durch das Lochblech geschützt und zentriert, das bei der Herstellung zusammen mit dem Vergußkörper zunächst einen soliden Block bildet, bis dieser zur Bildung der Innenwand konzentrisch ausgebohrt wird, die das Materialrohr in genauer Passung aufnimmt. Die Steckmontage von Heizeinheit und Thermofühler erfordert nur einen Arbeitsschritt, nämlich achsparalleles Einschieben in die seitliche Gehäuse-Aussparung.

Laut Anspruch 2 umschließt der insbesondere aus Messingguß gebildete Vergußkörper innerhalb eines Stahlrohrs konzentrisch eine isolierte Heizwicklung, die im Vergußkörper durch ein teilhülsenförmiges Halteelement zentriert ist. Dank der hohen Wärmeleitfähigkeit des Messinggußkörpers ist über das (z.B. aus Kupfer bestehende) Lochblech ein unbehinderter Wärmeübergang an das Materialrohr gegeben. Nach Anspruch 3 hat das Stahlrohr eine seitliche Ausnehmung zum (berührungsfreien) Einführen der Anschlüsse des Thermofühlers.

In weiterer Ausgestaltung ist das Fühlerrohr laut Anspruch 4 in einem Umfangs-Segment des Vergußkörpers form- und/oder stoffschlüssig gehaltert, beispielsweise zwischen Abkantungen von Umfangs-Enden des Lochblechs. Dieses bildet gemäß Anspruch 5 namentlich einen offenen Hohlzylinder, während das Umfangs-Segment als Kammer dient, in der das Fühlerrohr Platz findet.

Die Heizeinheit kann entsprechend Anspruch 6 von einer Zentrierschraube oder einer Zentrierhülse am Gehäuse gefaßt sein, je nachdem, wie eine zugehörige Vorkammerbuchse gestaltet bzw. vorbereitet ist. Nur dieses Bauelement braucht also ausgewechselt zu werden, um eine andere Ausführungsform zu erhalten, die den jeweiligen Einbau-Bedingungen angepaßt ist.

Die Steckmontage vollzieht sich besonders einfach und mit ausgezeichnetem Wärmeübergang, wenn im Einklang mit Anspruch 7 das Materialrohr wärmeleitend unter satter Anlage seines Schaftes an der Innenwandung der Heizeinheit in diese einsteckbar ist, nämlich durch Einschieben in Axialrichtung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1: eine Axialschnittansicht zweier Bauformen einer Heißkanaldüse,
- Fig. 2a: eine Seitenansicht einer Heizeinheit, teilweise im Schnitt,
- Fig. 2b: eine Draufsicht auf die Heizeinheit von Fig. 2a und
- Fig. 2c: eine Teil-Stirnansicht zu Fig. 2a.

In ihrer Gesamtheit ist eine Heißkanaldüse mit 10 bezeichnet, die ein Gehäuse 12 mit einer Aussparung 13 und Schraublöchern 14 hat. In das Gehäuse 12 ist ein Materialrohr 16 so einsetzbar, daß sein Kopf 18 oben bündig abschließt, der einen Dichtungsring 19 zum Anschluß an einen (nicht gezeichneten) Verteiler aufweist.

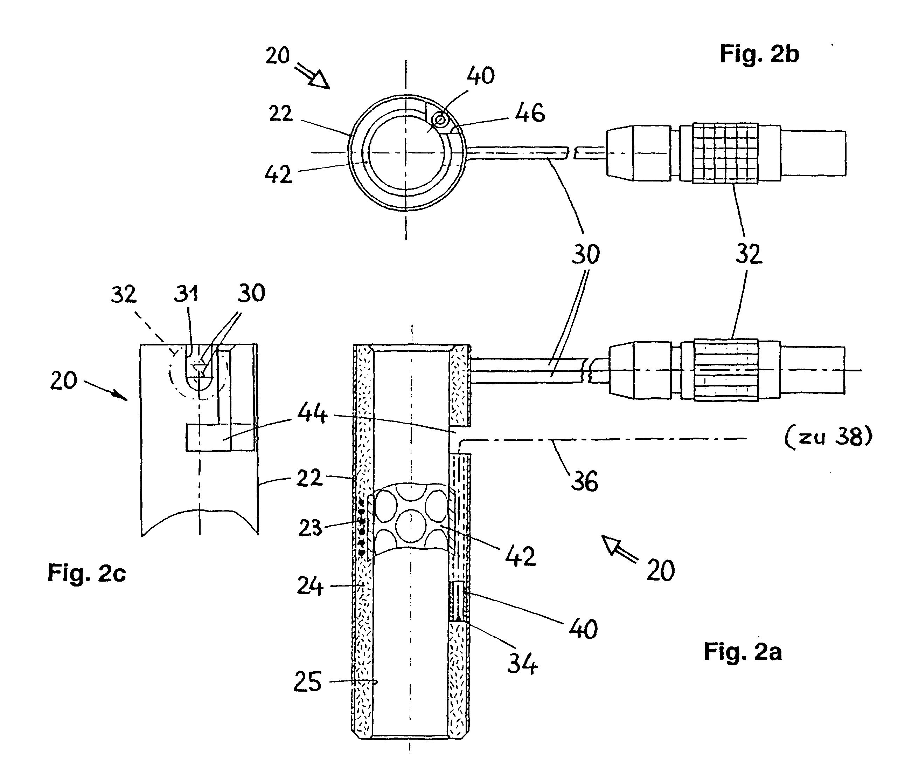

Das Materialrohr 16 steckt in einer Heizeinheit 20, die ein Stahlrohr 22 hat, in dem sich eine Heizwicklung 23 (Fig. 2a) innerhalb eines Vergußkörpers 24 befindet. Die Wicklung 23 wird durch ein eingelegtes Lochblech 42 zentriert, das bei der Herstellung zusammen mit dem aus Messing bestehenden Vergußmaterial zunächst einen soliden Block bildet, bis dieser zur Bildung einer Innenwand 25 konzentrisch ausgebohrt wird. Letztere faßt den langen Schaft 17 des Materialrohrs 16, in das unten eine Düsenspitze 26 eingesetzt ist, vorzugsweise durch Verschraubung. Die Düsenspitze 26 setzt den Heißkanal bis an die strichpunktiert eingezeichnete Ebene eines Formnests F fort.

Die Heizwicklung 23 ist mit Anschlüssen 30 versehen, die in einem Verbinder 32 gehaltert und zum Anschluß an eine (nicht dargestellte) Stromversorgung bestimmt sind. Die Anschlüsse 30 sind isoliert und gehen an einer seitlichen Aussparung 31 aus der Heizeinheit 20 berührungsfrei nach außen.

In dem Stahlrohr 22 ist eine L-förmige Ausnehmung 44 vorhanden (Fig. 2c), die dazu dient, Anschlüsse 36 eines Thermofühlers 34 in der Heizeinheit 20 nach unten zu führen. Diese hat dazu ein Fühlerrohr 40, das in einem Segment 46 zwischen den Umfangs-Enden des Lochblechs 42 sitzt. Die Anordnung ist in Fig. 2c um 45° versetzt gezeichnet, wie sich durch Vergleich mit der lagerichtigen Anordnung von Fig. 2b ergibt. Hieraus sieht man, daß das Lochblech 42 einen offenen Hohlzylinder bildet, wobei das Segment 46 als Kammer vorgesehen ist, in der das Fühlerrohr 40 Platz findet. Es kann von den Umfangs-Enden des Lochblechs 42 seitlich gefaßt sein, die dazu abgekantet sein können. Im Fühlerrohr 40 reicht der Thermofühler 34 so weit zur Düsenspitze 26 hin, wie es die räumlichen Verhältnisse der Heizwicklung 23 erlauben.

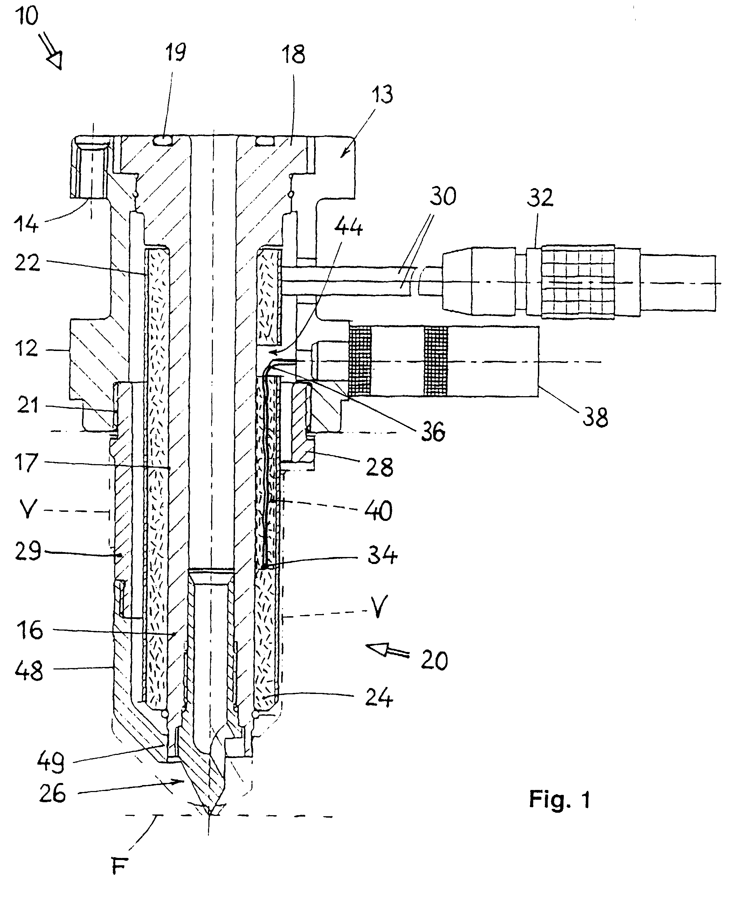

Die Heizeinheit 20 kann mittels einer Zentrierschraube 28 (Fig. 1 rechts) oder einer Zentrierhülse 29 (Fig. 1 links) am Gehäuse 12 durch eine Schraubverbindung 21 gehalten sein. Welche Bauform gewählt wird, hängt von der Gestaltung einer mit strichpunktierten Linien angedeuteten Vorkammerbuchse V ab, die zum Einbau in ein (nicht dargestelltes) Werkzeug gewählt werden kann. Während die Bauform mit kurzer Zentrierschraube 28 den unteren Bereich der Heizeinheit 20 frei läßt, schließt bei der Bauform mit Zentrierhülse 29 an diese ein Schaftfuß 48 an, dessen unteres Ende 49 den Schaft 17 des Materialrohrs 16 im Bereich der Düsenspitze 26 führt.

Man erkennt, daß die Heizeinheit 20 einen sehr stabilen Verbundkörper bildet, in dem der Thermofühler 34 mechanisch geschützt angeordnet ist. Wesentliche Vorteile der Erfindung beruhen darauf, daß die Heizwicklung 23, die als Wendelrohrpatrone gestaltet sein kann, im Stahlrohr 22 durch das Lochblech 42 zentriert gehalten und durch den Verguß 24, der vorzugsweise aus Messing besteht, gut wärmeleitend gehalten ist. Das Fühlerrohr 40 ist insbesondere aus Edelstahl und so angeordnet, daß es an der Heizwicklung 23 vorbei bis in den unteren Bereich der Heißkanaldüse 10 geführt ist. Dabei bietet das Fühlerrohr 40 mechanischen Schutz für die Anschlüsse 36 zu dem beispielsweise aus Fe/CuNi bestehenden Thermofühler 34, der durch die Einbettung im Vergußkörper 24 dessen Temperatur erfaßt.

Die Erfindung ist nicht auf die dargestellten Ausführungsbeispiele beschränkt. Man erkennt jedoch, daß eine Heißkanaldüse 10 mit außenbeheiztem Materialrohr 16 und Düsenspitze 26 erfindungsgemäß eine vormontierte Heizeinheit 20 mit einem Vergußkörper 24 hat, der in einem Umfangs-Segment 46 ein Rohr 40 für einen Thermofühler 34 haltert. Der insbesondere aus Messingguß gebildete Körper 24 umschließt in einem Stahlrohrs 22 eine isolierte Heizwicklung 23 konzentrisch, die durch teilhülsenförmiges Halteelement 42 mechanisch geschützt ist. Beispielsweise zwischen Abkantungen von Umfangs-Enden eines Lochblechs 42 ist das Fühlerrohr 40 im Vergußkörper 24 form- und/oder stoffschlüssig gehaltert. Das Stahlrohr 22 hat eine seitliche Ausnehmung 44 zum Einführen der Anschlüsse 36 des Thermofühlers 34. Das Materialrohr 16 ist wärmeleitend unter satter Anlage seines Schaftes 17 an der Innenwandung 25 in die Heizeinheit 20 einsteckbar.

## Patentansprüche

1. Heißkanaldüse (10) mit einem in ein Gehäuse (12) einsetzbaren, außenbeheizten Materialrohr (16), das am unteren Ende eine Düsenspitze (26) und einen an diesen Bereich herangeführten Thermofühler (34) aufweist, wobei dieser und die Heizung (20) seitlich mit elektrischen Anschlüssen (36 bzw. 30) versehen sind und wobei die Heizung als vormontierte Heizeinheit (20) mit einem Vergußkörper (24) ausgebildet ist, der ein den Thermofühler (34) aufnehmendes Fühlerrohr (40) haltert, dadurch **gekennzeichnet,** daß das Fühlerrohr (40) zwischen Umfangs-Enden eines Lochblechs (42) sitzt, das Bestandteil eines Rohrkörpers (22, 24) ist, dessen Innenwandung (25) eine Stützwand für eine dadurch mechanisch geschützte Heizwicklung (23) bildet, und daß die Anschlüsse (30; 36) von Heizeinheit (20) und Thermofühler (34) übereinander so angeordnet sind, daß deren Steckmontage in dem mit einer zugeordneten seitlichen Aussparung (13) versehenen Gehäuse (12) ausführbar ist.

2. Heißkanaldüse nach Anspruch 1, dadurch **gekennzeichnet,** daß der insbesondere aus Messingguß gebildete Vergußkörper (24) innerhalb eines Stahlrohrs (22) eine isolierte Heizwicklung (23) konzentrisch umschließt, die im Vergußkörper (24) durch ein teilhülsenförmiges Halteelement (42) zentriert ist.

3. Heißkanaldüse nach Anspruch 2, dadurch **gekennzeichnet,** daß das Stahlrohr (22) eine seitliche Ausnehmung (44) zum Einführen der Anschlüsse (36) des Thermofühlers (34) hat.

4. Heißkanaldüse nach einem der Ansprüche 1 bis 3, dadurch **gekennzeichnet**, daß das Fühlerrohr (40) in einem Umfangs-Segment (46) des Vergußkörpers (24) form- und/oder stoffschlüssig gehaltert ist, beispielsweise zwischen Abkantungen von Umfangs-Enden des Lochblechs (42).

5. Heißkanaldüse nach Anspruch 4, dadurch **gekennzeichnet,** daß das Lochblech (42) als offener Hohlzylinder ausgebildet ist und daß das Umfangs-Segment (46) eine Kammer zur Aufnahme des Fühlerrohrs (40) bildet.

6. Heißkanaldüse nach einem der Ansprüche 1 bis 5, dadurch **gekenn zeichnet,** daß die Heizeinheit (20) von einer Zentrierschraube (28) oder einer Zentrierhülse (29) am Gehäuse (12) gefaßt ist.

7. Heißkanaldüse nach einem der Ansprüche 1 bis 6, dadurch **gekennzeichnet,** daß das Materialrohr (16) wärmeleitend unter satter Anlage seines Schaftes (17) an der Innenwandung (25) der Heizeinheit (20) in diese einsteckbar ist.

## Claims

1. Hot runner nozzle (10) including an externally heatable material tube (16) which is insertable into a housing (12) and which comprises at its lower end a nozzle tip (26) and a heat sensor (34) extending up to this region, with the heat sensor (34) and a heating system (20) having lateral electric connection means (30; 36), the heating system being designed as a preassembled unit (20) with a sealing body (24) that supports a sensor tube (40) accommodating the heat sensor (34), wherein the sensor tube (40) is seated between periphral ends of a perforated metal sheet (42) forming part of a tubular body (22, 24) whose interior wall (25) forms a support wall for a heating coil (23) thus mechanically protected, and wherein the connection means (30; 36) of the heating unit (20) and of the heat sensor (34) are arranged on top of one another in such manner that these components are mountable by plugging into an associated recess (13) with which the housing (12) is provided.

2. Hot runner nozzle according to claim 1, wherein the sealing body (24) made in particular of brass concentrically encloses, within a steel pipe (22), the insulated heating coil (23) which is centered in the sealing body (24) by a partly sleeve-shaped retaining element (42).

3. Hot runner nozzle according to claim 2, wherein the steel pipe (22) comprises a lateral recess (44) for the insertion of the connection means (36) of the heat sensor (34).

4. Hot runner nozzle according to any one of claims 1 to 3, wherein the sensor tube (40) is positively or adhesively held in a peripheral segment (46) of the sealing body (24), for example between fold edges of peripheral ends of the perforated metal sheet (42).

5. Hot runner nozzle according to claim 4, wherein the perforated meat sheet (42) is designed as an open hollow cylinder and wherein the peripheral segment (46) forms a chamber for receiving the sensor tube (40).

6. Hot runner nozzle according to any one of claims 1 to 5, wherein the heating unit (20) is retained by a centering screw (28) or a centering sleeve (29) on the housing (12).

7. Hot runner nozzle according to any one of claims 1 to 6, wherein the material tube (16) is heat-conductively pluggable into the heating unit (20) with tight fit of the latter's interior wall (25) around the tube shaft (17).

## Revendications

1. Buse à canal chaud (10) avec une conduite de matériau (16) chauffée de l'extérieur, pouvant être placée dans un boîtier (12) et présentant à l'extrémité inférieure une tête de filière (26) et une sonde thermique (34) amenée à proximité de cette zone, la sonde et le chauffage (20) étant pourvus latéralement de raccords électriques (36 ou 30) et le chauffage étant conçu en tant qu'unité de chauffage prémontée (20) avec un corps coulé (24) qui loge un tube à sonde (40) recevant la sonde thermique (34), **caractérisée** en ce que le tube à sonde (40) se trouve entre les extrémités circonférentielles d'une tôle perforée (42) qui est un composant d'un corps tubulaire (22, 24) dont la paroi intérieure (25) forme une paroi d'appui pour un enroulement chauffant (23) ainsi protégé mécaniquement, et en ce que les raccords (30; 36) de l'unité de chauffage (20) et de la sonde thermique (34) sont agencés les uns au-dessus des autres de manière à pouvoir les assembler par enfichage dans le boîtier (12) pourvu d'un évidement latéral correspondant (13).

2. Buse à canal chaud selon la revendication 1, **caractérisée** en ce que le corps coulé (24), notamment en fonte de laiton, entoure concentriquement à l'intérieur d'un tube d'acier (22) un enroulement chauffant (23), lequel est centré dans le corps coulé (24) par un élément de fixation (42) partiellement en forme de douille.

3. Buse à canal chaud selon la revendication 2, **caractérisée** en ce que le tube d'acier (22) dispose d'un évidement latéral (44) servant à introduire les raccords (36) de la sonde thermique (34).

4. Buse à canal chaud selon l'une des revendications 1 à 3, **caractérisée** en ce que le tube à sonde (40) est tenu solidairement de forme et/ou de matière dans un segment circonférentiel (46) du corps coulé (24), par exemple entre des replis des extrémités circonférentielles de la tôle perforée (42).

5. Buse à canal chaud selon la revendication 4, **caractérisée** en ce que la tôle perforée (42) est conçue en tant que cylindre creux ouvert et en ce que le segment circonférentiel (46) forme une chambre pour recevoir le tube à sonde (40).

6. Buse à canal chaud selon l'une des revendications 1 à 5, **caractérisée** en ce que l'unité de chauffage (20) est tenue sur le boîtier (12) par une vis de centrage (28) ou par une douille de centrage (29).

7. Buse à canal chaud selon l'une des revendications 1 à 6, **caractérisée** en ce que la conduite de matériau (16) peut être enfichée, de manière à conduire la chaleur, dans l'unité de chauffage (20), avec un contact affleuré de sa tige (17) avec la paroi intérieure (25) de l'unité de chauffage (20).
